# EUROPEAN PATENT APPLICATION

(11) **EP 3 441 171 A1**
(43) Date of publication of application: **13.02.2019**
(21) Application number: 18187970.1
(22) Date of filing: 08.08.2018
(51) Int. Cl.: B23D 21/14, B23B 5/14, B28D 1/04, B23D 45/12

(54) **PIPE CUTTING APPARATUS**

(30) Priority: 10.08.2017 CN 201710680062
(71) Applicant: Tyco Electronics (Shanghai) Co. Ltd., Shanghai (CN); TE Connectivity Corporation, Berwyn, PA 19312 (US); TE Connectivity (Kunshan) Company Limited, Kunshan City Jiangsu (CN); Kunshan League Automechanism Co., Ltd., Kunshan City Jiangsu (CN)
(72) Inventor: DAI, Zhiyong, Shanghai, 200233 (CN); LU, Roberto Francisco-Yi, Bellvue, WA Washington 98006 (US); NI, Yichao, Shanghai, 200233 (CN); TAN, Yuanzhou, Kunshan (CN); HU, Musheng, Kunshan City (CN)
(74) Representative: Grünecker Patent- und Rechtsanwälte PartG mbB

(57) **Abstract**

A pipe cutting apparatus, includes: a disc cutter (110) having a first center axis (C1) and adapted to be inserted into a pipe (10) to cut off the pipe (10) from inside; a first driving device (111) adapted to drive the disc cutter (110) to rotate about the first center axis (CI); a second driving device (130, 131, 140, 150, 160) adapted to drive the disc cutter (110) to revolve about a second center axis (C2) parallel to the first center axis (CI); and a third driving device (121) adapted to move the disc cutter (110) in a radial direction perpendicular to the first center axis (CI) and the second center axis (C2), so that a distance (R) between the disc cutter (110) and the second central axis (C2) is adjustable and the disc cutter (110) is adapted to cut off pipes (10) with different diameters. The pipe cutting apparatus may automatically cut off the pipe.

## Description

### CROSS-REFERENCE TO RELATED APPLICATION

This application claims the benefit of Chinese Patent Application No.201710680062.5 filed on August 10, 2017 in the State Intellectual Property Office of China, the whole disclosure of which is incorporated herein by reference.

### BACKGROUND OF THE INVENTION

### Field of the Invention

At least one embodiment of the present disclosure relates to a pipe cutting apparatus.

### Description of the Related Art

During manufacturing pipe members, it is often necessary to cut a long pipe into a plurality of short pipes with a predetermined length. In the prior art, the long pipe is usually cut by manual, but the efficiency and quality of cutting the pipe by manual is relative low. In order to improve the efficiency and quality of cutting the pipe, a pipe cutting machine is proposed. However, the pipe cutting machine in the prior art can only cut pipes with the same diameter, and it cannot cut the pipes with different diameters, which limits its application.

### SUMMARY OF THE INVENTION

The present disclosure has been made to overcome or alleviate at least one aspect of the above mentioned disadvantages.

According to an object of the present disclosure, there is provided a pipe cutting apparatus adapted to cut off pipes with different diameters.

According to an aspect of the present disclosure, there is provided a pipe cutting apparatus, comprising: a disc cutter having a first center axis and adapted to be inserted into a pipe to cut off the pipe from inside; a first driving device adapted to drive the disc cutter to rotate about the first center axis; a second driving device adapted to drive the disc cutter to revolve about a second center axis parallel to the first center axis; and a third driving device adapted to move the disc cutter in a radial direction perpendicular to the first center axis and the second center axis, so that a distance between the disc cutter and the second central axis is adjustable, and the disc cutter is adapted to cut off pipes with different diameters.

According to an exemplary embodiment of the present disclosure, the pipe cutting apparatus further comprises an installation plate on one end of which the first driving device and the disc cutter are mounted.

According to another exemplary embodiment of the present disclosure, the first driving device comprises a first servo motor drive mechanism mounted on one end of the installation plate, and the disc cutter is mounted on an output shaft of the first servo motor drive mechanism.

According to another exemplary embodiment of the present disclosure, the second driving device comprises: a ring slide rail fixed on a frame of the pipe cutting apparatus and having a center axis coincided with the second central axis; a slide block fixed on the installation plate and slidably mounted on the ring slide rail; a ring big gear fixed on the frame and having a center axis coincided with the second central axis; a small gear fixed on the other end of the installation plate, adapted to be engaged with the ring big gear, and having a diameter less than that of the ring big gear; and a second servo motor drive mechanism mounted on the other end of the installation plate and configured to drive the small gear to rotate about its center axis. When the small gear is driven by the second servo motor drive mechanism to rotate about its center axis, the small gear revolves around the center axis of the ring big gear, and drives the slide block to slide along the ring slide rail, so as to drive the disc cutter mounted on the installation plate to revolve about the second center axis.

According to another exemplary embodiment of the present disclosure, the third driving device comprises a third servo motor drive mechanism mounted on the installation plate and is adapted to drive the first servo motor drive mechanism to move in the radial direction.

According to another exemplary embodiment of the present disclosure, the first servo motor drive mechanism is slidably mounted on the one end of the installation plate, and the third servo motor drive mechanism is adapted to drive the first servo motor drive mechanism to slide on the installation plate in the radial direction.

According to another exemplary embodiment of the present disclosure, the frame is configured to be a hollow annular frame with a center axis coincided with the center axes of the ring slide rail and the ring big gear.

According to another exemplary embodiment of the present disclosure, the small gear is located outside the ring big gear, and the ring slide rail is located inside the ring big gear. The first servo motor drive mechanism passes through an inner space of the ring slide rail.

According to another exemplary embodiment of the present disclosure, the pipe cutting apparatus further comprises a housing in which the first driving device, the second driving device, the third driving device, and the frame is received. The disc cutter is located outside the housing, so that the disc cutter is adapted to enter into the pipe to be cut.

According to another exemplary embodiment of the present disclosure, the pipe cutting apparatus further comprises a clamping device adapted to clamp and fix the pipe to be cut.

According to another exemplary embodiment of the present disclosure, the clamping device comprises at least one pair of clamp plates and a driving device adapted to drive each pair of clamp plates to close or open, so as to clamp the pipe or release the pipe; and each clamp plate has an arc clamping surface adapted to clamp on an outer circumference surface of the pipe to be cut.

According to another exemplary embodiment of the present disclosure, the clamping device comprises two pairs of clamp plates separated from each other in an axial direction of the pipe, and the two pairs of clamp plates are adapted to be synchronously closed or opened by the driving device so as to clamp the pipe or release the pipe.

According to another exemplary embodiment of the present disclosure, the pipe cutting apparatus further comprises a vacuum suction device comprising a suction pipe at a rear side of the disc cutter. The suction pipe is moved with the disc cutter, so as to enter into the pipe with the disc cutter and suck dust produced by cutting the pipe into the vacuum suction device.

In the above various exemplary embodiments of the present disclosure, the pipe may be automatically cut off by the disc cutter by driving the disc cutter to rotate about its center axis and revolve about the second center axis, improving the cutting efficiency and the cutting quality of the pipe. In addition, since the distance between the disc cutter and the second central axis is capable of being adjusted, the disc cutter is adapted to cut off pipes with different diameters, expanding the application range of the pipe cutting apparatus.

### BRIEF DESCRIPTION OF THE DRAWINGS

The above and other features of the present disclosure will become more apparent by describing in detail exemplary embodiments thereof with reference to the accompanying drawings, in which:
Fig.1 is an illustrative perspective view of a pipe cutting apparatus according to an exemplary embodiment of the preset disclosure;
Fig.2 is an illustrative local enlarged view of the pipe cutting apparatus of Fig.1;
Fig.3 shows a first driving device, a second driving device and a third driving device of the pipe cutting apparatus of Fig.2; and
Fig.4 is an illustrative view in which a cutter of the pipe cutting apparatus of Fig.2 rotates about its center axis and revolves about a second center axis.

### DETAILED DESCRIPTION OF PREFERRED EMBODIMENTS OF THE IVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to a general concept of the present disclosure, there is provided a pipe cutting apparatus, comprising: a disc cutter having a first center axis and adapted to be inserted into a pipe to cut off the pipe from inside; a first driving device adapted to drive the disc cutter to rotate about the first center axis; a second driving device adapted to revolve the disc cutter to rotate about a second center axis parallel to the first center axis; and a third driving device adapted to move the disc cutter in a radial direction perpendicular to the first center axis and the second center axis, so that a distance between the disc cutter and the second central axis is adjustable, and the disc cutter is adapted to cut off pipes with different diameters.

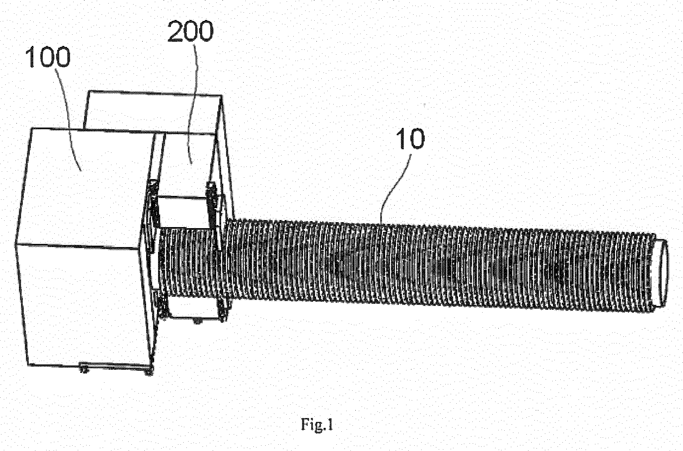

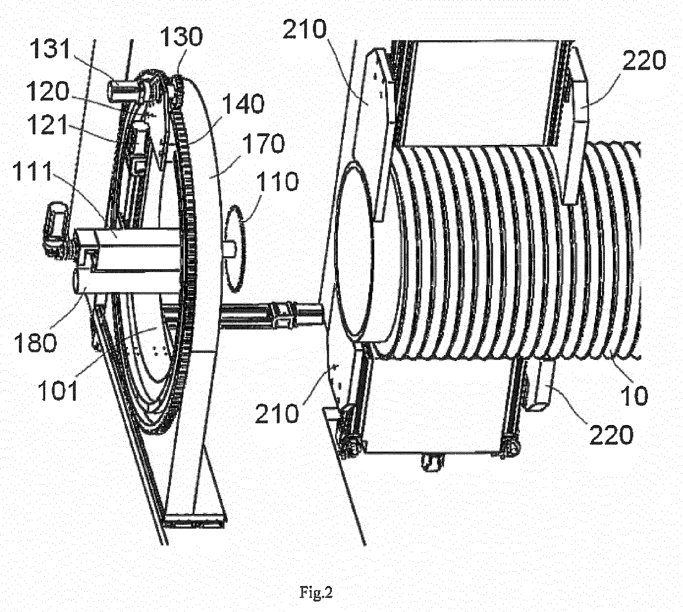

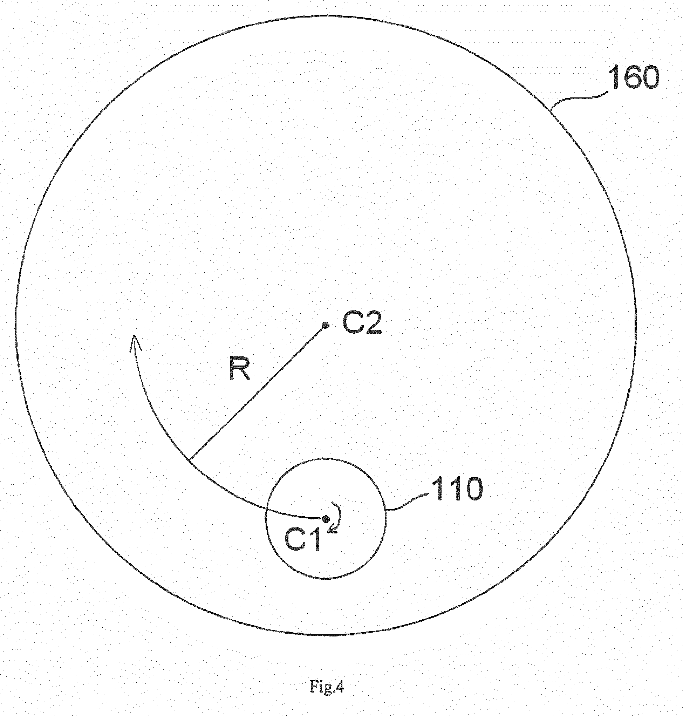

Fig.1 is an illustrative perspective view of a pipe cutting apparatus according to an exemplary embodiment of the preset disclosure; Fig.2 is an illustrative local enlarged view of the pipe cutting apparatus of Fig.1; Fig.4 is an illustrative view in which a cutter 110 of the pipe cutting apparatus of Fig.2 rotates about its center axis C1 and revolves about a second center axis C2.

As shown in Figs. 1-2 and 4, in an embodiment, the pipe cutting apparatus mainly comprises a disc cutter, a first driving device, a second driving device, and a third driving device.

As shown in Figs.2 and 4, in an embodiment, the disc cutter 110 has a first center axis C1 and is adapted to be inserted into a pipe 10 to cut off the pipe 10 from inside.

As shown in Figs.2 and 4, in an embodiment, the first driving device 111 is adapted to drive the disc cutter 110 to rotate about the first center axis C1. The second driving device is adapted to drive the disc cutter 110 to revolve about a second center axis C2 parallel to the first center axis C1.

As shown in Figs.2 and 4, in an embodiment, the third driving device 121 is adapted to move the disc cutter 110 toward the second center axis C2 in a radial direction perpendicular to the first center axis C1 and the second center axis C2, so that a distance R between the disc cutter 110 and the second central axis C2 is adjustable, and the disc cutter 110 is adapted to cut off pipes 10 with different diameters.

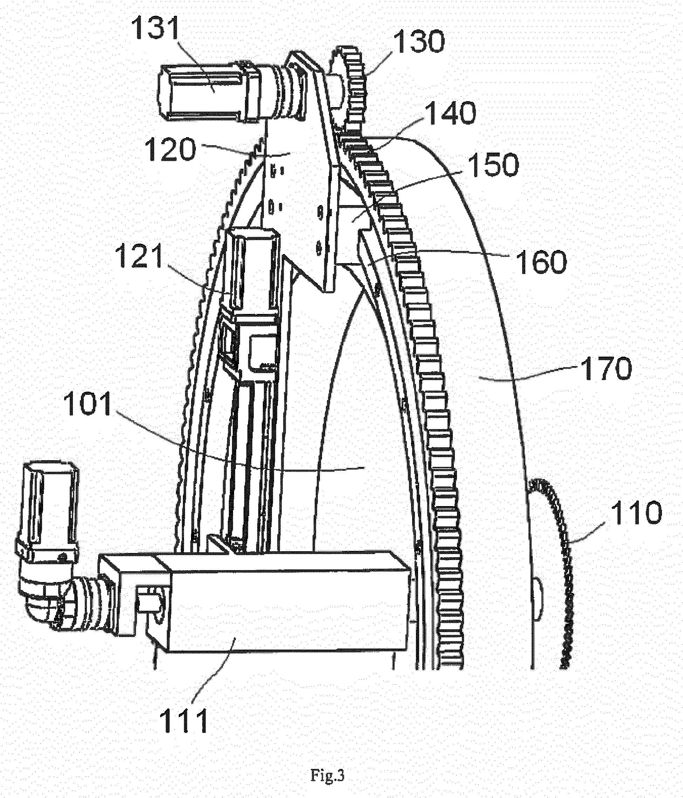

Fig.3 shows a first driving device, a second driving device and a third driving device of the pipe cutting apparatus of Fig.2.

As shown in Fig.3, in an embodiment, the pipe cutting apparatus further comprises an installation plate 120. The first driving device 111 and the disc cutter 110 are mounted on one end of the installation plate 120.

As shown in Fig.3, in an embodiment, the first driving device 111 comprises a first servo motor drive mechanism mounted on one end of the installation plate 120. The disc cutter 110 is mounted on an output shaft of the first servo motor drive mechanism 111.

As shown in Figs.3 and 4, in an embodiment, the second driving device mainly comprises a ring slide rail 160, a slide block 150, a ring big gear 140, a small gear 130, and a second servo motor drive mechanism 131. The ring slide rail 160 is fixed on a frame 170 of the pipe cutting apparatus and has a center axis coincided with the second central axis C2. The slide block 150 is fixed on the installation plate 120 and slidably mounted on the ring slide rail 160. The ring big gear 140 is fixed on the frame 170 and has a center axis coincided with the second central axis C2. The small gear 130 is fixed on the other end of the installation plate 120, adapted to be engaged with the ring big gear 140, and has a diameter less than that of the ring big gear 140. The second servo motor drive mechanism 131 is mounted on the other end of the installation plate 120 and configured to drive the small gear 130 to rotate about its center axis.

As shown in Figs.3 and 4, in an embodiment, when the small gear 130 is driven by the second servo motor drive mechanism 131 to rotate about its center axis, the small gear 130 revolves around the center axis of the ring big gear 140, and drives the slide block 150 to slide along the ring slide rail 160, so as to drive the disc cutter 110 mounted on the installation plate 120 to revolve about the second center axis C2.

As shown in Figs.3 and 4, in an embodiment, the third driving device comprises a third servo motor drive mechanism 121 mounted on the installation plate 120 and is adapted to drive the first servo motor drive mechanism 111 to move in the radial direction of the ring big gear 140. Thereby, the distance R between the disc cutter 110 and the second central axis C2 is adjustable, and the disc cutter 110 is adapted to cut off pipes 10 with different diameters.

As shown in Fig.3, in an embodiment, the first servo motor drive mechanism 111 is slidably mounted on the one end of the installation plate 120. The third servo motor drive mechanism 121 is adapted to drive the first servo motor drive mechanism 111 to slide on the installation plate 120 in the radial direction.

As shown in Figs.2-3, in an embodiment, the frame 170 is configured to be a hollow annular frame with a center axis coincided with the center axes of the ring slide rail 160 and the ring big gear 140.

As shown in Figs.2-3, in an embodiment, the small gear 130 is located outside the ring big gear 140. The ring slide rail 160 is located inside the ring big gear 140. The first servo motor drive mechanism 111 passes through an inner space 101 of the ring slide rail 160.

As shown in Fig.1, in an embodiment, the pipe cutting apparatus further comprises a housing 100 in which the first driving device, the second driving device, the third driving device, and the frame 170 are received. The disc cutter 110 is located outside the housing 100, so that the disc cutter 110 is adapted to enter into the pipe 10 to be cut.

As shown in Fig.2, in an embodiment, the pipe cutting apparatus further comprises a vacuum suction device comprising a suction pipe 180 at a rear side of the disc cutter 110. The suction pipe 180 is moved with the disc cutter 110, so as to enter into the pipe 10 with the disc cutter 110 and suck dust produced by cutting the pipe 10 into the vacuum suction device.

As shown in Figs. 1-2, in an embodiment, the pipe cutting apparatus further comprises a clamping device 200 adapted to clamp and fix the pipe 10 to be cut.

As shown in Figs.1-2, in an embodiment, the clamping device 200 comprises at least one pair of clamp plates 210, 220 and a driving device (not shown) adapted to drive each pair of clamp plates 210, 220 to close or open, so as to clamp the pipe 10 or release the pipe 10.

As shown in Fig.2, in an embodiment, each clamp plate 210, 220 has an arc clamping surface adapted to clamp on an outer circumference surface of the pipe 10 to be cut, so as to hold the pipe 10 from the outer side of the pipe 10.

As shown in Fig.2, in an embodiment, the clamping device 200 comprises two pairs of clamp plates 210, 220 separated from each other in an axial direction of the pipe 10. The two pairs of clamp plates 210, 220 are adapted to be synchronously closed or opened by the driving device, so as to clamp the pipe 10 or release the pipe 10.

In an exemplary embodiment of the present disclosure, the pipe 10 may be a flexible pipe or a rigid pipe.

Hereafter, it will describe in detail a process of cutting the pipe 10 by the pipe cutting apparatus with reference to Figs. 1-4.

Firstly, as shown in Figs. 1-2, clamping the pipe 10 by the clamping device 200;
then, moving the disc cutter 110 into the pipe 10;
then, as shown in Figs.3-4, activating the third servo motor drive mechanism 121 to adjust the distance R between the disc cutter 110 and the second central axis C2 until an blade of the disc cutter 110 brings into contact with an inner wall of the pipe 10;
then, as shown in Figs.3-4, activating the first servo motor drive mechanism 111 to drive the disc cutter 110 to rotate about the first center axis C1, while moving the disc cutter 110 outward in the radial direction of the pipe 10 by the third servo motor drive mechanism 121 until the blade of the disc cutter 110 is slightly exposed out of an outer wall of the pipe 10;
then, as shown in Figs.3-4, stopping the third servo motor drive mechanism 121, and activating the second servo motor drive mechanism 131 to drive the disc cutter 110 to revolve about the second center axis C2 while rotating about the first center axis C1;
finally, as shown in Figs.3-4, after the disc cutter 110 revolves a circle about the second center axis C2, stopping the first servo motor drive mechanism 111 and the second servo motor drive mechanism 131.

In this way, the pipe 10 is cut off by the disc cutter 110.

It should be appreciated for those skilled in this art that the above embodiments are intended to be illustrated, and not restrictive. For example, many modifications may be made to the above embodiments by those skilled in this art, and various features described in different embodiments may be freely combined with each other without conflicting in configuration or principle.

Although several exemplary embodiments have been shown and described, it would be appreciated by those skilled in the art that various changes or modifications may be made in these embodiments without departing from the principles and spirit of the disclosure, the scope of which is defined in the claims and their equivalents.

As used herein, an element recited in the singular and proceeded with the word "a" or "an" should be understood as not excluding plural of said elements or steps, unless such exclusion is explicitly stated. Furthermore, references to "one embodiment" of the present disclosure are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

## Claims

1. A pipe cutting apparatus, comprising:
a disc cutter (110) having a first center axis (C1) and adapted to be inserted into a pipe (10) to cut off the pipe (10) from inside; and
a first driving device (111) adapted to drive the disc cutter (110) to rotate about the first center axis (C1);
**characterized in that**, the pipe cutting apparatus further comprises:
a second driving device (130, 131, 140, 150, 160) adapted to drive the disc cutter (110) to revolve about a second center axis (C2) parallel to the first center axis (C1); and
a third driving device (121) adapted to move the disc cutter (110) in a radial direction perpendicular to the first center axis (C1) and the second center axis (C2), so that a distance (R) between the disc cutter (110) and the second central axis (C2) is adjustable and the disc cutter (110) is adapted to cut off pipes (10) with different diameters.

2. The pipe cutting apparatus according to claim 1, further comprising:
an installation plate (120) on one end of which the first driving device (111) and the disc cutter (110) are mounted.

3. The pipe cutting apparatus according to claim 2,
wherein the first driving device (111) comprises a first servo motor drive mechanism mounted on one end of the installation plate (120), and the disc cutter (110) is mounted on an output shaft of the first servo motor drive mechanism.

4. The pipe cutting apparatus according to claim 3,
wherein the second driving device comprises:
a ring slide rail (160) fixed on a frame (170) of the pipe cutting apparatus and having a center axis coincided with the second central axis (C2);
a slide block (150) fixed on the installation plate (120) and slidably mounted on the ring slide rail (160);
a ring big gear (140) fixed on the frame (170) and having a center axis coincided with the second central axis (C2);
a small gear (130) fixed on the other end of the installation plate (120), adapted to be engaged with the ring big gear (140), and having a diameter less than that of the ring big gear (140); and
a second servo motor drive mechanism (131) mounted on the other end of the installation plate (120) and configured to drive the small gear (130) to rotate about its center axis,
wherein when the small gear (130) is driven by the second servo motor drive mechanism (131) to rotate about its center axis, the small gear (130) revolves around the center axis of the ring big gear (140), and drives the slide block (150) to slide along the ring slide rail (160), so as to drive the disc cutter (110) mounted on the installation plate (120) to revolve about the second center axis (C2).

5. The pipe cutting apparatus according to claim 4,
wherein the third driving device comprises a third servo motor drive mechanism (121) mounted on the installation plate (120) and is adapted to drive the first servo motor drive mechanism (111) to move in the radial direction.

6. The pipe cutting apparatus according to claim 5,
wherein the first servo motor drive mechanism (111) is slidably mounted on the one end of the installation plate (120), and the third servo motor drive mechanism (121) is adapted to drive the first servo motor drive mechanism (111) to slide on the installation plate (120) in the radial direction.

7. The pipe cutting apparatus according to any one of claims 4-6,
wherein the frame (170) is configured as a hollow annular frame with a center axis coincided with the center axes of the ring slide rail (160) and the ring big gear (140).

8. The pipe cutting apparatus according to claim 7,
wherein the small gear (130) is located outside the ring big gear (140), and the ring slide rail (160) is located inside the ring big gear (140); and
wherein the first servo motor drive mechanism (111) passes through an inner space (101) of the ring slide rail (160).

9. The pipe cutting apparatus according to any one of claims 4-8, further comprising:
a housing (100) in which the first driving device, the second driving device, the third driving device, and the frame (170) are received;
wherein the disc cutter (110) is located outside the housing (100), so that the disc cutter (110) is adapted to enter into the pipe (10) to be cut.

10. The pipe cutting apparatus according to any one of claims 1-9, further comprising:
a clamping device (200) adapted to clamp and fix the pipe (10) to be cut.

11. The pipe cutting apparatus according to claim 10,
wherein the clamping device (200) comprises at least one pair of clamp plates (210, 220) and a driving device adapted to drive each pair of clamp plates (210, 220) to close or open, so as to clamp the pipe (10) or release the pipe (10); and
wherein each clamp plate (210, 220) has an arc clamping surface adapted to clamp on an outer circumference surface of the pipe (10) to be cut.

12. The pipe cutting apparatus according to claim 11,
wherein the clamping device (200) comprises two pairs of clamp plates (210, 220) separated from each other in an axial direction of the pipe (10), and the two pairs of clamp plates (210, 220) are adapted to be synchronously closed or opened by the driving device, so as to clamp the pipe (10) or release the pipe (10).

13. The pipe cutting apparatus according to any one of claims 1-12, further comprising:
a vacuum suction device comprising a suction pipe (180) at a rear side of the disc cutter (110), and the suction pipe (180) is moved with the disc cutter (110) so as to enter into the pipe (10) with the disc cutter (110) and suck dust produced by cutting the pipe (10) into the vacuum suction device.
